# EUROPÄISCHE PATENTANMELDUNG

(11) **EP 3 933 178 A1**
(43) Veröffentlichungstag der Anmeldung: **05.01.2022**
(21) Anmeldenummer: 21000153.3
(22) Anmeldetag: 10.06.2021
(51) Int. Cl.: F01M 11/12

(54) **BRENNKRAFTMASCHINE MIT ÖLPEILSTAB MIT FIXIERUNG DURCH DAUERMAGNET UND VERSCHLUSS ÖLPEILSTABBOHRUNG MIT FIXIERUNG DURCH DAUERMAGNET**

(30) Priorität: 04.07.2020 DE 102020004046
(71) Anmelder: DEUTZ Aktiengesellschaft, 51149 Köln (DE)
(72) Erfinder: Klosterberg, Johannes, Swisttal (DE); Werner, Thomas, Köln (DE)

(57) **Zusammenfassung**

1. Brennkraftmaschine mit Ölpeilstab mit Fixierung durch Dauermagnet und Verschluss Ölpeilstabbohrung mit Fixierung durch Dauermagnet
2. Beschrieben wird eine Brennkraftmaschine mit wenigstens einem Kurbelgehäuse (1), wenigstens einem Zylinderkopf, wenigstens einer Ölwanne und einem Aufnahmeelement zur Aufnahme eines Stopfens (5) und wenigstens einen Stopfen (5) sowie ein Verfahren zum Betreiben einer Brennkraftmaschine.

## Beschreibung

Die Erfindung betrifft eine Brennkraftmaschine mit Ölpeilstab mit Fixierung durch einen Dauermagneten bzw. einen Verschlussstopfen der Ölpeilstabbohrung mit einer Fixierung durch wenigstens einen Dauermagneten.

Bisherige Ölpeilstäbe an Brennkraftmaschinen werden in der Regel nur durch die Klemmkraft der O-Ringe fixiert. Weitere Lösungen sind das Klemmen durch Formschluss. Hierbei ist der Bereich des Schraubenkopfes derart gestaltet, dass dieser in eine Nut oder ähnliches einrastet. Auch Lösungen in der Art eines Bajonettverschlusses sind bekannt. Die letztgenannten Lösungen mit Formschluss benötigen hierzu eine besondere Gestaltung der Ölpeilstabbohrung bzw. des Ölpeilstabführungsrohres. Dies ist teuer. Den Ölpeilstab allein durch die Klemmkraft der O-Ringe zu fixieren, kann durch Vibration oder erhöhten Kurbelgehäuseinnendruck zum Herausfallen des Peilstabes führen.

Aufgabe der vorliegenden Erfindung ist es, die oben genannten Nachteile zu vermeiden und eine Brennkraftmaschine zu schaffen, die einen sicheren und kostengünstigen Verschluss bzw. Ölpeilstab aufweist.

Diese Aufgabe wird erfindungsgemäß durch eine Brennkraftmaschine mit den in Anspruch 1 und 10 gekennzeichneten Merkmalen durch eine Brennkraftmaschine und ein Verfahren gelöst. Vorteilhafte Ausgestaltungen der Erfindung sind in den weiteren Ansprüchen enthalten.

Ein weiterer Vorteil der vorgestellten Lösung ist eine sehr einfache Gestaltung der Bohrung des Kurbelgehäuses sowie des Kopfes am Ölpeilstab.

Ein Stopfen oder auch Stöpsel ist ein Gegenstand, der dazu dient, ein Loch dicht zu verschließen. Das Wort ist eine Substantivierung zum nieder- und mitteldeutschen Verb stoppen, was so viel wie anhalten oder auch im Lauf aufhalten, nämlich durch ein Hindernis sperren, bedeutet. Durch den Verschluss sollen das Entweichen oder das Eindringen eines Gases oder einer Flüssigkeit, zum Beispiel Wasser oder Öl, verhindert werden. Im Gegensatz zum Deckel werden Stöpsel in das Loch eingepresst und nicht über das Loch gestülpt. Da Stopfen dichthalten sollen, werden diese meist aus weichen Materialien wie Gummi oder Kork gefertigt. So lassen sie sich leichter stauchen und in das etwas kleinere Loch pressen. Es existieren aber auch Stöpsel aus Glas oder Holz. In Österreich wird der Korken einer Weinflasche ebenfalls Stöpsel (oder auch Stoppel) genannt, da bis Ende des 17. Jahrhunderts statt eines Korkens Holzstöpsel verwendet wurden. Die Römer verschlossen ihre Amphoren bereits mit Korken, die mit Pech versiegelt wurden, aber diese Technik geriet dann mit dem Untergang des Römischen Reiches wieder in Vergessenheit. Im Norden verwendete man dazu Flachs- oder Hanfabfälle, die mit Wachs abgedichtet wurden. Im 15. Jahrhundert wurde der Wein nicht mehr nur im Fass gehandelt, dadurch lernten die Deutschen auch die französische Verschlusstechnik mittels Korkrinde kennen.

Weitere Anwendungen sind das Verschließen von Reagenzgläsern in der Chemie durch den Schliffstöpsel, in der Medizin der Schluss von Kathetern und Infusionsschläuchen. Auch im Arbeitsschutz in lauten Produktionsstätten oder in der Freizeit bei Konzerten werden Ohrenstöpsel verwendet. Der Begriff Stöpsel wird auch für Stecker als elektrisches Bauelement wie bspw. Cinch-Stecker verwendet. Stöpsel bzw. Stopfen finden in Badewannen, Wasch- oder Spülbecken ihre Anwendung, indem sie den Abfluss abdichten.

Ein Dauermagnet oder auch Permanentmagnet ist ein Magnet aus einem Stück hartmagnetischen Materials, zum Beispiel Legierungen aus Eisen, Cobalt, Nickel oder bestimmten Ferriten. Er hat und behält ein gleichbleibendes Magnetfeld, ohne dass man, wie bei Elektromagneten, elektrische Leistung aufwenden muss. Dauermagnete besitzen an ihrer Oberfläche je einen oder mehrere Nord- und Südpole. Erste künstliche Dauermagnetmaterialien wurden um 1750 von John Canton hergestellt. Ein Dauermagnet kann durch die Einwirkung eines Magnetfeldes auf ein ferritmagnetisches oder ferromagnetisches Material mit einer großflächigen Hysteresekurve (sogenanntes hartmagnetisches Material) erzeugt werden. Frühe Magnetwerkstoffe auf Basis von Eisen haben zu den Begriffen hartmagnetisch und weichmagnetisch geführt: harter, kohlenstoffreicher Stahl lässt sich dauermagnetisch machen, während sich kohlenstoffärmeres, weiches Eisen (Weicheisen) kaum dauermagnetisieren lässt und sich daher besser zur Herstellung von Eisenkernen für Elektromagnete eignet. Durch ein abklingendes magnetisches Wechselfeld, Erwärmung oder Stoßeinwirkung kann ein Dauermagnet entmagnetisiert werden. Die im Alltag bekannteste Form sind Ferritmagnete, z. B. als Haftmagnet oder - mit Eisen-Polschuhen versehen - als Schranktür-Verschluss. Ein Permanentmagnet übt auf alle ferromagnetischen Stoffe wie z. B. Eisen und auf ferritmagnetische Stoffe - wie Ferrite - eine Anziehung aus. Zwei Permanentmagnete ziehen sich mit ihren ungleichnamigen Polen an und stoßen gleichnamige Pole ab. Entlang des Umfangs magnetisierte Ringe besitzen keine Pole und üben keine Kräfte aus - sie sind zwar magnetisiert, werden aber nicht als Dauermagnete bezeichnet. Magnetisierte Schichten von Magnetbändern, Magnetstreifen oder Festplatten besitzen zwar Pole, werden aber ebenfalls nicht als Dauermagnet bezeichnet. Die Hysteresekurven von magnetisierbaren, hartmagnetischen Materialien sind im Gegensatz zur dargestellten Grafik besonders breit und ähneln einem Rechteck, bei dem die fast senkrechten Kurven die Feldstärkeachse bei großen Feldstärken bei Hc schneiden. Die dargestellte Grafik zeigt eher die Hysteresekurve eines weichmagnetischen Werkstoffes, der sich zum Beispiel bei der Aufnahme der Hysteresekurve in einem Transformator mit einem nur kleinen Luftspalt oder in einem Epsteinrahmen befindet. Bei weichmagnetischen Werkstoffen, wie zum Beispiel Blechen oder Ferriten für Transformator-Kerne, ist die Hysteresekurve sehr schmal und schneidet die Feldstärkeachse bei kleinen Feldstärkewerten. Das Energieprodukt, auch BH-Produkt genannt, ist die gesamte im Magneten gespeicherte Feldenergie. Die Energiedichte ist die auf das Volumen des Magneten bezogene magnetische Energie.

Die Feldstärke, die aufgewendet werden muss, um den Magneten vollständig zu entmagnetisieren (Flussdichte B = 0) ist Schnittpunkt der Hysteresekurve mit der Achse der Feldstärke H. Je größer die Koerzitivfeldstärke, desto größer ist die Beständigkeit des Magneten gegen Entmagnetisierung durch äußere Felder. Während die Curie-Temperatur den Punkt des Verschwindens der ferromagnetischen Eigenschaft eines Materials angibt, verschwindet die makroskopische Orientierung der Weiss-Bezirke und damit die Dauermagneteigenschaften schon bei deutlich geringeren Temperaturen irreversibel. Generell ist diese makroskopische Orientierung bei Temperaturen oberhalb des absoluten Nullpunkts instabil, im praktischen Gebrauch kann allerdings für die relevanten Materialien ein Temperaturbereich angegeben werden, in dem die unvermeidliche Demagnetisierung unmerklich langsam verläuft, bzw. im Wesentlichen durch mechanischen Stress bestimmt wird. Mit Remanenz bezeichnet man die Flussdichte, die ohne äußeres Feld auftritt. Ihr Wert ist an der Hysteresekurve ablesbar als der Wert von B bei H = 0. Dauermagnete wurden früher aus Stahl erzeugt. Sie sind aber sehr schwach und lassen sich sehr leicht entmagnetisieren. Die bekannteste Form sind Hufeisenmagnete. In Stahlwerkzeugen können sich Dauermagnetisierungen auch durch plastische mechanische Verformung bilden. Das ist ein Hinweis auf deren mechanische Überlastung. Aluminium-Nickel-Cobalt (AlNiCo)-Magnete bestehen aus Eisenlegierungen mit Aluminium, Nickel und Cobalt als Hauptlegierungselemente. Diese Materialien sind bis 500 °C einsetzbar, haben aber eine relativ geringe Energiedichte und Koerzitivfeldstärke. Die Remanenz ist höher als bei den Ferritmagneten. Die Herstellung erfolgt durch Gießen oder pulvermetallurgische Verfahren. Sie haben eine gute Korrosionsbeständigkeit, sind aber zerbrechlich und hart. Bismanol ist eine Legierung aus Bismut, Mangan und Eisen und bildet als Legierung ein starkes Permanentmagnetmaterial. Magnete aus hartmagnetischen Ferriten sind kostengünstig, aber relativ schwach und haben eine maximale Gebrauchstemperatur von 250 °C. Typische Anwendung sind Haftmagnete und Feldmagnete von Gleichstrommotoren und elektrodynamischen Lautsprechern. Seltenerdmagnete wie beispielsweise Neodym-Eisen-BorNeodym-Eisen-Bor (NdFeB) ermöglicht sehr starke Magnete zu akzeptablen Kosten. Lange Zeit waren die Einsatztemperaturen auf maximal 60 - 120 °C begrenzt. Bei neueren Entwicklungen mit Zusätzen wie Dysprosium werden Einsatztemperaturen bis 200 °C angegeben. Samarium-CobaltSamarium-Cobalt (SmCo) mit 20 - 25 % Eisenanteil ermöglicht starke Dauermagnete mit hoher Energiedichte und hoher Einsatztemperatur. Nachteilig ist der hohe Preis. Eine Sonderform unter den Magnetmaterialen stellen nichtmetallische, organische Kunststoffe mit permanentmagnetischen Eigenschaften dar, wie das Kunststoffmagnetmaterial PANiCNQ, welches bei Raumtemperatur ferromagnetische Eigenschaften aufweist.

Der Ölmessstab oder auch Peilstab bzw. Ölstab oder ein Schauglas zeigen bei einer Brennkraftmaschine an, wie viel Öl sich noch im Reservoir, z. B. der Ölwanne befindet. Der Ölstand ist vom Hersteller vorgegeben und liegt zwischen einem definierten Minimum und Maximum. Zur Messung sollte das die Brennkraftmaschine enthaltende Fahrzeug auf ebener Fläche stehen und in einem in der Bedienungsanleitung vorgegebenem Zustand sein - oft ist beispielsweise der Ölstand nach Anleitung bei abgestelltem Motor in betriebswarmem Zustand zu messen. Danach ist der Ölmessstab herauszuziehen, zu reinigen und nochmals vollständig einzuschieben, da sonst im Inneren des Motors vom Zylinderkopf auf den Messstab gefallene Öltropfen einen erhöhten Ölstand vortäuschen könnten. Nun kann man den Messstab wieder herausziehen und den Ölstand ablesen. Ein Ölstand über dem Maximum führt dazu, dass die Kurbelwelle ständig ins Öl schlägt und es dadurch aufschäumt; der Ölschaum schmiert schlecht und kann Schäden hervorrufen. Zudem bremst der Schaum die Spritzweite des Öls, so dass die Kolbenlauffläche nicht ausreichend geschmiert wird. Überfüllung hat noch einen weiteren Nachteil: Bei zu hohem Ölstand können wichtige Entlüftungsbohrungen des Kurbelgehäuses vom Ölspiegel überdeckt werden, was dazu führt, dass überschüssiges Öl über die Kurbelgehäuseentlüftung in den Ansaugtrakt gelangt und im Motor verbrannt wird. Dies kann erheblich höhere Verbrennungstemperaturen, Nachglühen auf der Oberfläche des Zylinderkopfes und bei Benzinmotoren Klopfen durch vorzeitige Zündung im nächsten Zyklus und damit Schäden an vielen Bauteilen des Motors bis hin zum kapitalen Motorschaden und des Katalysators zur Folge haben. Bei zu geringem Ölstand muss Öl nachgefüllt werden, um zu verhindern, dass die Ölpumpe Luft ansaugt, was einen Öldruckabfall hervorrufen würde. Ein solcher wird durch die Öldruckwarnleuchte signalisiert. Wenn diese aufleuchtet, wird der Motor bereits geschädigt. Daher werden bei einigen Fahrzeugen Ölstandsensoren eingebaut, die zu geringen Ölstand schon vor einem Absinken des Öldrucks anzeigen. Die Öldruckleuchte wird vom zündungsgeschalteten Plus vom Öldruckschalter auf das Motorgehäuse als Minuspol geschaltet. Der Öldruckschalter sitzt im Ölkanal hinter der Pumpe und nach dem Ölfilter. Der Öldruck öffnet den Kontakt. Öldruckschalter können mit verschiedenen Schaltdrücken abmessungsgleich verfügbar sein. Mehrpolige Öldruckschalter haben zusätzliche Schalter, die potentialneutral zum Gehäuse sind oder Sensorkontakte für Öldruck- und Öltemperaturmessung oder sind in ein Bussystem integriert.

Die Erfindung wird nachstehend an einem Ausführungsbeispiel näher erläutert. In der Zeichnung zeigen:
- Figur 1:: Ölpeilstab (links) und Verschlussstopfen (rechts) mit Fixierung durch Dauermagnet
- Figur 2:: Ölpeilstab mit Magnetfixierung im Einbauzustand
- Figur 3:: Verschlussstopfen mit Magnetfixierung im Einbauzustand.

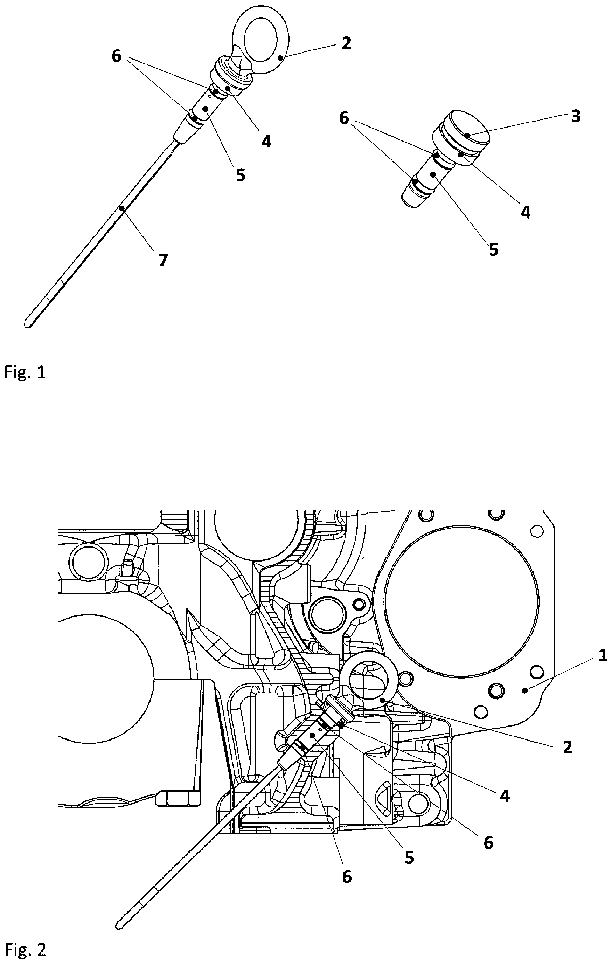

Die in Figur 1 gezeigte Ausführungsform weist zur Fixierung des Peilstabes am Kurbelgehäuse 1 einen Dauermagneten 4 auf. Die konstruktive Ausführung des Peilstabes ist in Fig. 1 auf der linken Seite dargestellt. Der Peilstab, welcher aus dem Peilstabkopf 2 mit dem zylindrischem Teil 5 und dem eigentlichem Peilstab 7 besteht, erhält am Peilstabkopf einen Dauermagneten 4. Der Dauermagnet 4 kommt im eingesteckten Zustand des Peilstabes am Kurbelgehäuse 1 zur Anlage, wie dies auch in Figur 2 dargestellt wird. Der Peilstab wird hierdurch mit einer Kraft von etwa 5 bis 10 kg am Kurbelgehäuse 1 fixiert. Dies ist ausreichend, um diesen für die im Betrieb zulässigen Kurbelgehäuseinnendrücke und dem Prüfüberdruck bei der Motorabnahme am Kurbelgehäuse zu fixieren. Zur Abdichtung gegen den Ölraum erhält der zylindrische Teil des Stopfens 5 einen oder mehrere O-Ringe 6.

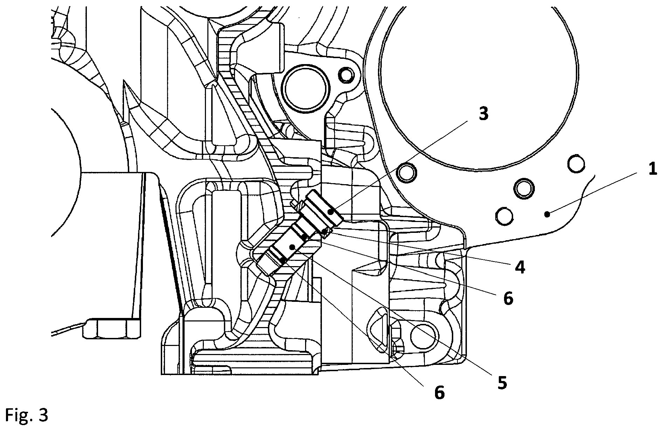

Das Prinzip der Fixierung mit Dauermagneten wird weiterhin auf einen Verschlussstopfen für die Ölpeilstabbohrung übertragen, wie dies in Figur 1 in der rechten Darstellung gezeigt wird sowie in Figur 3. Gegenüber dem Ölpeilstab entfällt lediglich der Peilstab 7. Der Kopf des Stopfens 3 kann, wie dargestellt, anders gestaltet sein, z. B. durch eine gerade Fläche, die senkrecht zur Längsachse.

### Bezugszeichenliste

- 1: Kurbelgehäuse
- 2: Peilstabkopf mit ringartigem Element
- 3: Kopf des Stopfens
- 4: Dauermagnet
- 5: zylindrischer Teil des Stopfens
- 6: ein oder mehrere O-Ringe ober- und unterhalb des zylindrischen Teils des Stopfens
- 7: Peilstab mit Minimum- und Maximum-Markierung

## Patentansprüche

1. Brennkraftmaschine mit wenigstens einem Kurbelgehäuse (1), wenigstens einem Zylinderkopf, wenigstens einer Ölwanne und einem Aufnahmeelement zur Aufnahme eines Stopfens (5) und wenigstens einen Stopfen (5).

2. Brennkraftmaschine nach Anspruch 1,
**dadurch gekennzeichnet, dass** am Stopfen (5) ein Peilstab (7) angeordnet ist.

3. Brennkraftmaschine nach Anspruch 1 oder 2,
**dadurch gekennzeichnet, dass** der Stopfen (5) derart ausgestaltet ist, dass er in das Aufnahmeelement eingeführt und befestigt werden kann.

4. Brennkraftmaschine nach einem oder mehreren der vorgenannten Ansprüche,
**dadurch gekennzeichnet, dass** der zylindrische Teil des Stopfens (5) wenigstens eine Ringnut zur Aufnahme eines O-Ringes aufweist.

5. Brennkraftmaschine nach einem oder mehreren der vorgenannten Ansprüche,
**dadurch gekennzeichnet, dass** ein oder mehrere O-Ringe ober- und unterhalb des zylindrischen Teils des Stopfens (5) angeordnet sind.

6. Brennkraftmaschine nach einem oder mehreren der vorgenannten Ansprüche,
**dadurch gekennzeichnet, dass** der Kopf des Stopfens kreisförmig ausgebildet ist.

7. Brennkraftmaschine nach einem oder mehreren der vorgenannten Ansprüche,
**dadurch gekennzeichnet, dass** der Kopf des Stopfens (3) als Peilstabkopf mit ringartigem Element (2) ausgebildet ist.

8. Brennkraftmaschine nach einem oder mehreren der vorgenannten Ansprüche,
**dadurch gekennzeichnet, dass** unterhalb des Kopfes des Stopfens (3) ein Dauermagnet (4) angeordnet ist.

9. Verfahren zum Betreiben einer Brennkraftmaschine,
**dadurch gekennzeichnet, dass** eine Brennkraftmaschine nach einem oder mehreren der vorgenannten Ansprüche zum Einsatz kommt.
